# EUROPEAN PATENT APPLICATION

(11) **EP 0 555 021 A1**
(43) Date of publication of application: **11.08.1993**
(21) Application number: 93300654.6
(22) Date of filing: 29.01.1993
(51) Int. Cl.: G11B 7/00, B41M 5/28

(54) **Optical storage**

(30) Priority: 03.02.1992 GB 9202244
(71) Applicant: GEC-MARCONI LIMITED, Stanmore, Middlesex HA7 4LY (GB)
(72) Inventor: Devereux, Carolyn, Shefford, Bedfordshire SG17 5QS (GB); Clark, Michael George, Gerrards Cross, Buckinghamshire SL9 7NX (GB); Taylor, Gregory Stuart, St. Albans, Hertfordshire AL1 5NT (GB)
(74) Representative: George, Sidney Arthur

(57) **Abstract**

In a method of producing a stored image (9) on a layer (5) of liquid crystal polymer, elements of the layer are selectively heated, by use of a thermal printing head (6), to produce an isotropic optical texture of the selected elements as compared with a scattering or aligned texture of the unselected elements.

## Description

This invention relates to optical storage, and particularly to a method of producing an image on a liquid crystal polymer optical storage material.

Liquid crystal polymers are a specific class of liquid crystal material which not only exhibit the properties of conventional liquid crystals, such as anisotropy of refractive index and dielectric susceptibility, but also have the advantages of polymer materials, such as mechanical integrity and ease of processing.

In conventional use of such liquid crystal polymers, a dye is added to the polymer to act as a heat absorber for subsequent writing of an image using a laser. The dye is added in solution with the polymer or is bonded covalently on to the polymer backbone. In order to produce an image, the polymer is addressed by pulses of energy from a scanning laser beam. The laser energy is absorbed by the dye, which thereby causes localised heating of elements of the liquid crystal polymer, producing a change of optical texture in those elements.

This laser addressing of liquid crystal polymers has a number of disadvantages. Firstly, it is necessary to find a suitable dye and then to incorporate it in the polymer material. Secondly, the use of a scanning laser involves a high degree of mechanical and electronic control.

It is an object of the present invention to provide an improved method of producing a stored image on a layer of optical storage liquid crystal polymer material.

According to the invention there is provided a method of producing a stored image on a layer of liquid crystal polymer optical storage material, the method comprising selectively heating elements of the layer by use of a thermal printing head to produce an isotropic optical texture of the selected elements as compared with a scattering or aligned texture of the unselected elements.

An embodiment of the invention will now be described, by way of example, with reference to the accompanying drawing, in which
Figure 1 is a schematic cross-sectional view of a liquid crystal polymer optical storage sheet for use in accordance with the invention, and
Figure 2 illustrates, schematically, apparatus for producing a stored image using the storage sheet of Figure 1.

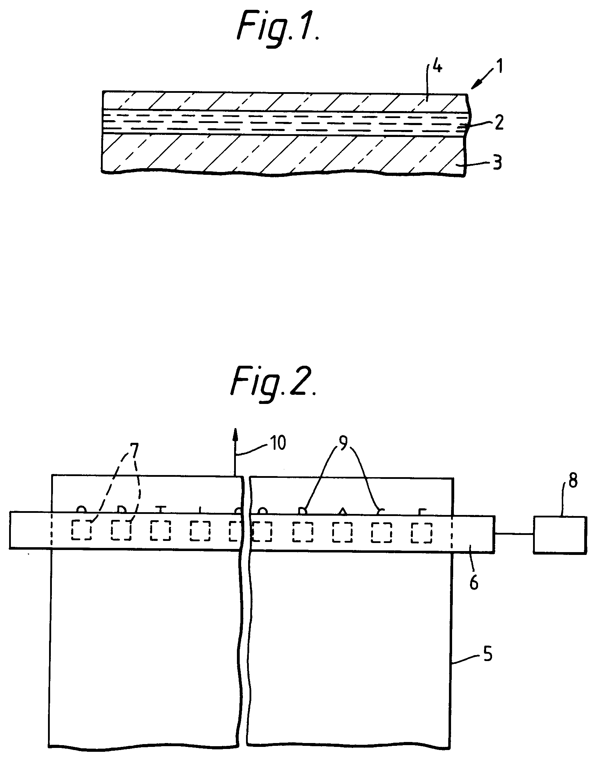

Referring to Figure 1 of the drawing, an optical storage sheet 1 comprises a layer 2 of liquid crystal polymer material deposited on a transparent substrate 3 by, for example, a conventional doctor blade technique. The substrate 3 may be formed of, for example, polyethylene terephthalate and may be, for example, 100µm thick. The layer 2 may be, for example, 2-20µm thick, a preferred thickness being 3-5µm. The polymer material is of a type having a glass phase at a temperature above normal ambient temperature, and, at higher temperatures, a nematic phase and a clear isotropic phase, the glass/nematic and nematic/clear phase transition temperatures being denoted by T_{g} and T_{c}, respectively. A protective coating 4 may, if desired, be deposited over the polymer layer 2. The coating 4 may be a multilayer coating.

Either before or after deposition of the coating 4, the polymer layer 2 is initialised to produce therein an optimum overall light-scattering texture. This initialisation may be achieved by, for example, a method described in British patent Publication No. 2248065A.

The sheet 1 may, if necessary, be cut into pieces of a required size and shape.

Figure 2 shows apparatus for writing data into such a piece 5 of storage material. The piece 5 is disposed in contact with a standard thermal printer head 6 of the kind which is conventionally used for printing on, for example, thermally-sensitive paper. The printer head comprises one or more rows of matrices 7 of thermal printing elements, the elements of a matrix being selectively energisable to print dots forming a respective character. Each matrix may comprise, for example, seven rows each containing five elements. The matrices 7 are energised by an electronic control circuit 8 to print successive rows of characters, as required, such as a row 9, during relative movement between the piece 5 and the head 6. It will be apparent that the piece 5 may be fed past the head 6 in a direction indicated by an arrow 10, or the head may be moved in the opposite direction over the piece 5, in each case the movement being controlled by the control circuit 8.

Before exposure to the heating effect of the printing elements, the polymer material is in its initialised light-scattering state. On energisation of selected thermal printing elements, corresponding elements of the polymer material are heated so that they pass through their glass phase and their nematic phase to reach the clear phase in which the selected polymer elements are in an isotropic liquid state. When the printing elements are de-energised, the corresponding liquid crystal polymer elements cool rapidly back through T_{c} and T_{g} in such a short time that the isotropic state which is achieved in the heated polymer elements is retained while those elements return to the solid glass state. The isotropic texture is optically transparent, so that each printed dot provides an optically negative (i.e. clear) pixel against a light-scattering background provided by the unheated regions of the polymer.

The data thus written on the piece of polymer sheet can be erased, if desired, by subjecting the polymer again to the initialisation process, so that it returns to the totally light-scattering state. The piece can then be used again by writing new data using the thermal printer head. Alternatively, additional data may be added to an already-written piece by passing the piece again through the thermal printer head.

Data may therefore be written on the polymer material by using a thermal printer in the same manner as for conventional thermally-sensitive paper or other material. However, it will be apparent that very substantial advantages are achieved by use of the polymer material, as indicated below:-
(1) Since the characters formed on the polymer material are transparent, the material may be used, without further processing, for overhead projection or 35mm projection, and can also be viewed directly in ambient lighting conditions. Printed heat-sensitive paper, on the other hand, cannot be used satisfactorily for projection purposes.
(2) The data stored on the polymer can be readily modified or erased, as explained above, whereas data printed on other thermal printing media cannot be changed or erased.
(3) The polymer sheet is mechanically stronger than the conventional thermal printing media, which are easily torn.
(4) Data items stored on the polymer material are permanent and do not degrade with time to any significant extent, whereas data written on thermally-sensitive paper will degrade relatively rapidly.

The use of a thermal printer head instead of the usual scanning laser beam for writing data on a liquid crystal polymer sheet is advantageous, in that:-
(1) Incorporation of a dye into the polymer is not required.
(2) Thermal printer heads and their control equipment are readily available. They can produce one or more rows of characters simultaneously, whereas the use of a laser beam involves complicated scanning and pulsing of the laser to produce a row of characters.

In the above-described embodiment the polymer material is initialised into a light-scattering state and, after heating with the thermal printer head 6, the selected elements attain a clear texture. However, if the material were initialised in the presence of an electric field, the initialised state would be a clear texture. The thermal printer would then heat the selected elements of the material into their liquid crystal phase, i.e. above T_{g} but below T_{c}, so that those elements would become optically-scattering. On subsequently cooling the material to a temperature below T_{g}, the resulting image would consist of scattering writing on a clear background, i.e. it would be a positive contrast image.

Although either of the proposed initialistion processes would normally be carried out entirely by heating the sheet in an oven, in an alternative initialisation technique the sheet might be heated in an oven to a temperature between T_{g} and T_{c}, and the initialisation process then completed by heating the sheet further, while still in the oven, using a non-pixellated thermal head which is scanned across the sheet or past which the sheet is moved. It has been found that the local heating of the polymer material which is effected as the thermal head and the sheet move relative to one another can result in a denser scattering texture of the initialised material than is produced in a sheet which is solely heated in an oven.

## Claims

1. A method of producing a stored image (9) on a layer (5) of liquid crystal polymer optical storage material, characterised by selectively heating elements of the layer by use of a thermal printing head (6) to produce an isotropic optical texture of the selected elements as compared with a scattering or aligned texture of the unselected elements.

2. A method as claimed in Claim 1, characterised in that the selected elements of the liquid crystal polymer material (5) are heated by the thermal printing head (6) so that they pass through a glass phase and a nematic phase to reach the isotropic phase, which is retained when the elements subsequently cool rapidly.

3. A method as claimed in Claim 1 or Claim 2, characterised in that before use of the thermal printing head (6), the liquid crystal polymer material is initialised by a process including the step of heating the material by causing relative movement between the layer and a heated thermal head.
